# EUROPEAN PATENT APPLICATION

(11) **EP 4 586 574 A1**
(43) Date of publication of application: **16.07.2025**
(21) Application number: 24221514.3
(22) Date of filing: 19.12.2024
(51) Int. Cl.: H04L 41/0253, H04L 41/0806, H04L 41/0895

(54) **AUTOMATICALLY PROVISIONING AN INSTANCE OF A LIGHTWEIGHT SUPERVISOR IN A WIRELESS NETWORK**

(30) Priority: 11.01.2024 IN 202411002070
(71) Applicant: Honeywell International Inc., Charlotte, NC 28202 (US)
(72) Inventor: NADUMANE, Venugopala, Charlotte, 28202 (US); KUMAR, Kanhayia, Charlotte, 28202 (US); SINGH, Rajiv, Charlotte, 28202 (US)
(74) Representative: Haseltine Lake Kempner LLP

(57) **Abstract**

A method for automatically onboarding an instance of a lightweight web-based supervisor in a network includes receiving configuration information associated with one or more commissioned devices in the network. The method includes automatically discovering an installation or initial execution of the instance of the lightweight web-based supervisor on the one or more commissioned devices in the network. The method includes subsequent to automatically discovering the installation or initial execution of the instance of the lightweight web-based supervisor, automatically provisioning the instance of the lightweight web-based supervisor based at least on the configuration information of the one or more commissioned devices. The method includes subsequent to automatically configuring the lightweight web-based supervisor, automatically mapping and displaying operational information and configuration information associated with the one or more commissioned devices via a dashboard of the instance of the lightweight web-based supervisor.

## Description

### TECHNICAL FIELD

The present disclosure relates generally to supervisors in wireless networks, and more particularly to methods of automatically provisioning (e.g., automatically onboarding) an instance of a lightweight supervisor in a wireless network.

### BACKGROUND

Building management systems often include and/or are deployed to control various electrical and electromechanical components and/or systems of or installed at a building. Example components and/or systems installed in a building include, but are not limited to, heating, ventilation, and air conditioning (HVAC) systems and components thereof, surveillance systems and components thereof, security systems and components thereof, Internet-of-Things devices, etc. Building management systems may include devices from a single company configured to communicate and/or operate using a single, common protocol; however, often times a building management system may include different types of devices from various companies and/or devices such as those that may be configured to communicate and/or operate on different protocols and/or to perform different functions than one or more other devices of the building system.

Smart sockets are an example of an IoT device. Smart sockets may provide power to a variety of different devices that are plugged into a smart socket. Smart sockets can include circuitry that allows a user to remotely control the smart socket, for instance, to control whether the smart socket provides power to a device that is connected to a receptacle of the smart socket. A number of smart sockets may communicate with a supervisor, sometimes through one or more hubs.

Prior to use in a given network, a supervisor may be onboarded to the given network. Supervisor onboarding is typically a process that involves multiple manual steps such as installation and licensing, driver and network configuration, device/network discovery, build device and point list, configure history, configure alarms, configure schedules, graphics creation, navigation hierarchy generation, etc.) to tailor operation of the supervisor to the given network (e.g., to one or more specific mesh networks including IoT devices such as smart sockets). Additionally, supervisors employed with a building management system typically utilizing a large amount of memory and/or large amount of processing capability.

Once provisioned (e.g., onboarded) the supervisors provide control (e.g., setpoint, on/off control, etc.) of connected assets and equipment's. For instance, lights, fans, and HVAC equipment may be turned on and off based on particular schedule (e.g., at a particular time, day, week, and/or specific date, etc.). However, Supervisor schedule creation is typically a process that involves multiple manual steps (e.g., manual operation performed on-site at a controller level by installers and/or commissioning engineers, etc.). Moreover, if a site has a BMS supervisor, then there may have a global schedules which are configured at site level which will override the local on-site controller schedules. Yet, typically in a multi-site customer environments, there is no proper mechanism to visualize and manage schedules at different hierarchy such as portfolio level, region wise, site wise etc.

What would be desirable is a lightweight web-based supervisor in a network (e.g., a wireless mesh network) that can be employed in an absence of a dedicated on-site computer (e.g., a dedicated on site PC) and/or in the absence of a gateway, and yet that can be automatically provisioned without any of the manual steps typically associated with onboarding a supervisor to a network. Additionally, what would be desirable is a lightweight web-based supervisor in a network that may be readily permit visualization of schedules at portfolio level from multiple sites, permit automatic creation of new schedules and events at portfolio level and publish the new schedules to individual sites, permit automatic group schedule creation tailored to specific networks and/or connected devices in the network, and/or permit the group schedules to be automatically applied (e.g., as a default) to connected devices in the network.

### SUMMARY

The present disclosure relates generally to supervisors in wireless networks, and more particularly to methods of automatically provisioning an instance of a lightweight supervisor (e.g., a lightweight web-based supervisor) in a wireless mesh network.

An example method for automatically onboarding an instance of a lightweight web-based supervisor in a network is described, the method includes receiving configuration information associated with one or more commissioned devices in the network, automatically discovering an installation or initial execution of the instance of the lightweight web-based supervisor on the one or more commissioned devices in the network; subsequent to automatically discovering the installation or initial execution of the instance of the lightweight web-based supervisor, automatically provisioning the instance of the lightweight web-based supervisor based at least on the configuration information of the one or more commissioned devices; and subsequent to automatically configuring the lightweight web-based supervisor, automatically mapping and displaying operational information and configuration information associated with the one or more commissioned devices via a dashboard of the instance of the lightweight web-based supervisor.

Another example method for automatically onboarding an instance of a lightweight web-based supervisor in a network is described, where the lightweight web-based supervisor is operatively discoverable and configurable based on configuration information of devices in the network, the method comprising: commissioning one or more devices in the network; receiving configuration information associated with one or more commissioned devices in the network; automatically discovering an installation or initial execution of the instance of the lightweight web-based supervisor on the one or more commissioned devices in the network; automatically provisioning the instance of the lightweight web-based supervisor based at least on the configuration information of the one or more commissioned devices; automatically mapping and displaying operational information and configuration information associated with the one or more commissioned devices via a dashboard of the instance of the lightweight web-based supervisor; and altering a configuration or operation of the one or more commissioned devices in the network responsive to an input received via the dashboard of the lightweight web-browser based supervisor.

Another example method for automatically onboarding an instance of a lightweight web-based supervisor in a wireless network is described, wherein the instance of the lightweight web-based supervisor is operatively discoverable and configurable based on configuration information of a plurality of internet-of-things (IoT) devices in the wireless network, wherein the plurality of IoT devices are wirelessly coupled via the wireless network to one or more hubs, and wherein the one or more hubs are configured as a web server, the method comprising: commissioning the plurality of IoT devices; determining configuration information associated with each IoT device of the plurality of IoT devices in the wireless network; storing the configuration information associated with each IoT device the plurality of IoT devices; automatically discovering an installation or initial execution of the instance of the lightweight web-based supervisor on the hub; automatically provisioning the instance of the lightweight web-based supervisor based at least on the configuration information; subsequent to automatically provisioning the lightweight web-based supervisor, automatically mapping and displaying configuration information and operation information associated with the plurality of IoT devices via a dashboard of the instance of the lightweight web-based supervisor; and altering a configuration or operation of one or more of the plurality of IoT devices in the wireless network responsive to an input received via the dashboard of the lightweight web-based supervisor.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram of an illustrative mesh system;
Figure 2 is a schematic block diagram of an illustrative mesh system;
Figures 3A, 3B, 3C, 3D, and 3E are illustrative user interfaces of a mobile device that together are suitable for commissioning devices in a wireless network;
Figure 4 illustrates an example of a user interface displaying configuration information of commissioned devices that is suitable for provisioning an instance of a lightweight supervisor in a wireless network;
Figure 5 illustrates a schematic view of an illustrative system suitable for automatically provisioning an instance of a lightweight supervisor in a device in a wireless network;
Figure 6 is a flow diagram showing an illustrative method for provisioning an instance of a lightweight supervisor in a wireless network;
Figure 7 is a flow diagram showing another illustrative method for provisioning an instance of a lightweight supervisor in a wireless network; and
Figure 8 is a flow diagram showing yet another illustrative method for provisioning an instance of a lightweight supervisor in a wireless mesh network;
Figure 9 is a schematic view of an illustrative system suitable for automatically managing equipment groups and schedules via an instance of a lightweight web-based supervisor;
Figure 10 is an example of a dashboard displaying operating information and groups of commissioned devices;
Figure 11 is another example of the dashboard displaying operating information and groups of commissioned devices;
Figure 12 is an example of a user interference of an application executing on the mobile device.
Figure 13 is a block diagram of an example of group creation and scheduling;
Figure 14 is a block diagram of an example of equipment detection;
Figure 15 is a flow diagram showing an illustrative method for automatically managing equipment schedules via an instance of a lightweight supervisor;
Figure 16 is a flow diagram showing another illustrative method for automatically managing equipment schedules via an instance of a lightweight supervisor; and
Figure 17 is a flow diagram showing yet another illustrative method for automatically managing equipment schedules via an instance of a lightweight supervisor.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranged by endpoints includes all numbers subsumed within that range (e.g., 1 to 5 includes, 1, 1.5, 2, 2.75, 3, 3.8, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

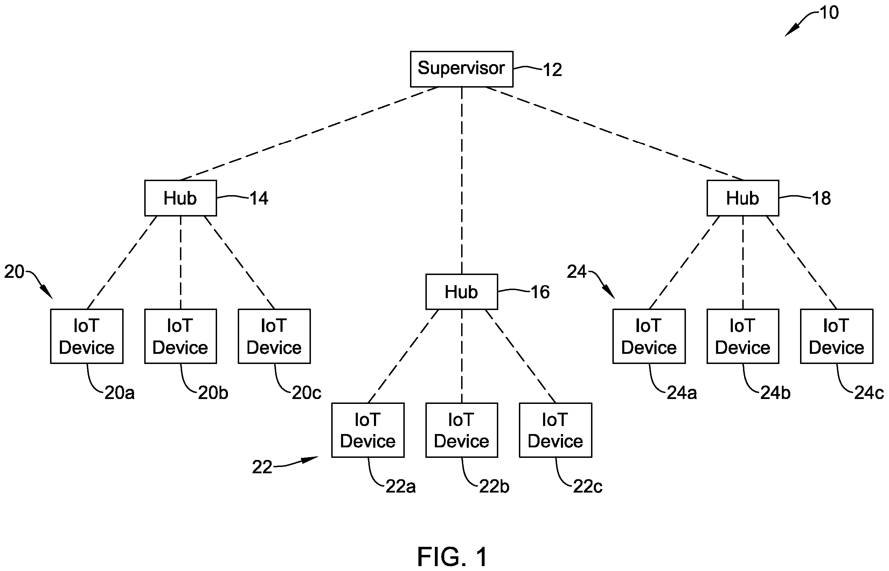

Figure 1 is a schematic block diagram showing an illustrative system 10. The illustrative system 10 includes a supervisor 12, a first hub 14, a second hub 16 and a third hub 18. While a total of three hubs 14, 16 and 18 are shown, it will be appreciated that this is merely illustrative, as the system 10 may include any number of hubs. Examples of suitable hubs include smart thermostats, smart speakers, and/or other smart devices. For instance, in some examples one or more of the hubs 14, 16, 18 may be manifested as a thermostat with a user interface, or other type of hub with a user interface.

The system 10 includes a number of IoT (Internet of Things) devices, divided into a first group of IoT devices 20, a second group of IoT devices 22, and a third group of IoT devices 24. The IoT devices within the first group of IoT devices 20 are individually labeled as 20a, 20b and 20c. The IoT devices within the second group of IoT devices 22 are individually labeled as 22a, 22b and 22c. The IoT devices within the third group of IoT devices 24 are individually labeled as 24a, 24b and 24c. This is merely illustrative, as the first group of IoT devices 20, the second group of IoT devices 22 and/or the third group of IoT devices 24 may each include any number of IoT devices, and in some cases may include a substantially larger number of IoT devices.

Each of the IoT devices in the groups of IoT devices 20, 22, and 24 may independently be any of a variety of different types of IoT devices. In general, IoT devices are physical objects having sensors, processing ability, software and/or other technologies that allow the devices to connect with and exchange data with other devices and systems over the Internet and/or other communication networks. IoT devices can include home automation devices, elder care devices, medical devices, transportation devices, vehicle to vehicle communication devices, building automation devices, industrial devices, maritime devices, infrastructure devices, energy management devices, environmental monitoring devices, and others. In some cases, a smart socket may be considered as being an example of an IoT device. A smart socket is an electrical receptacle that provides power to a device that is plugged into the electrical receptacle. In some cases, a smart socket includes circuitry that is able to monitor various aspects of the power being provided to the device, as well as communications circuitry that allows the smart socket to report those power aspects to another device such as a hub. In some cases, a smart socket can include circuitry that allows a user to remotely control the smart socket to control whether the smart socket provides power to a device that is connected to a receptacle of the smart socket. These are just examples.

In some instances, the first group of IoT devices 20 and the first hub 14 may together be considered as forming a first wireless mesh network, the second group of IoT devices 22 and the second hub 16 may together be considered as forming a second wireless mesh network, and the third group of IoT devices 24 and the third hub 18 may together be considered as forming a third wireless mesh network. The devices within the first wireless mesh network communicate in normal circumstances with only the other devices within the first wireless mesh network. The devices within the second wireless mesh network communicate in normal circumstances with only the other devices within the second wireless mesh network.

As mentioned, supervisor onboarding is typically a process that involves multiple manual steps (e.g., installation and licensing, driver and network configuration, device discovery, build device and point list, configure history, configure alarms, configure schedules, graphics creation, navigation hierarchy etc.) to tailor operation of the supervisor to a specific network (e.g., to specific mesh networks including IoT devices such as smart sockets).

As a result, onboarding the supervisor to a particular network (e.g., to manage specific IoT devices in the particular network) is typically a time-consuming process that may be prone to errors. Moreover, the supervisors are typically large supervisors (e.g., utilizing a large amount of memory and/or large amount of processing capability) which may be employed in conjunction with an on-site gateway (e.g., Beats gateway and/or a Modbus gateway), and/or a dedicated on-site computer (e.g., PC). As a result, networks employing such large supervisors are typically costly and/or inefficient.

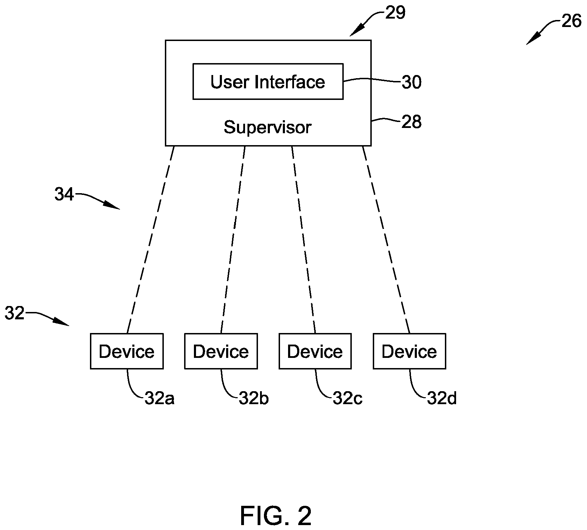

Accordingly, the disclosure is directed to automatically provisioning an instance of a lightweight supervisor (e.g., lightweight web-based supervisor) in a mesh network. Such approaches may utilize configuration information of one or more commissioned devices (e.g., smart sockets) in the network as the basis to automatically provision an installed instance of a lightweight supervisor (e.g., tailor a dashboard of the lightweight supervisor to facilitate management of the one or more commissioned devices). In some embodiments, the configuration information may be obtained from a commissioning application executing on a mobile device. Thus, the approaches herein may reduce an amount of time to onboard an installed instance of a lightweight supervisor, may eliminate errors that are typically associated with manually onboarding the supervisor, and/or may reduce costs associated with the onboarding and/or operation of the supervisor (e.g., the lightweight supervisor may be employed in the absence of a gateway and/or in the absence of a dedicated on-site computer (e.g., PC)). For instance, as illustrated in Figure 1, the system 10 may be without a dedicated on-site computer (e.g., a PC) and may be without a gateway. While the supervisor 12 is depicted in figure 1 as being separate from the hubs, in some embodiments, the supervisor 12 may be included in one or more of the hubs, as described in more detail in Figure 2.

Figure 2 is a schematic block diagram showing an illustrative system 26. The illustrative system 26 may be considered as being an example of the system 10, and vice versa. The system 26 includes a supervisor 28. The supervisor 28 may be manifested as an application executing a computer such as a computer server and/or a smartphone. For instance, the supervisor 12 may be manifested as an instance of an application that is installed on and executable by a processing device included in one or more hubs such as the first hub 14, the second hub 16, and/or the third hub 18. In some instances, the supervisor 28 may be manifested as an instance of a lightweight web-based (e.g., web-browser based) application that can be installed on and executed by a hub. Use of the instance of the lightweight-web-based (e.g., web-browser based) supervisor may promote aspects herein such as permitting the automatic provisioning of the instance of a lightweight supervisor in a mesh network and/or reducing a quantity of equipment and/or software in the system 26 (e.g., the absence of a gateway and/or the absence of a dedicated on-site computer (e.g., a PC)).

As illustrated in Figure 2, the supervisor 28 may include a user interface 30. In some cases, the user interface 30 may be a display configured to display information such as identifying information and/or configuration information of one or more commissioned devices in a wireless network. In some cases, the user interface 30 may include a data entry device such as a keyboard, mouse, trackball or electronic writing surface. In some cases, the user interface 30 may include a touch screen that functions as a display as well as providing data entry functionality.

The illustrative system 26 includes a number of devices 32 that are operatively coupled in a mesh network 34. The devices 32 are individually labeled as 32a, 32b, 32c and 32d. While a total of four devices 32 are shown, it will be appreciated that this is merely illustrative, as the system 26 may include any number of devices 32, and in some cases may include a substantially greater number of devices 32. In some cases, some of the devices 32 may represent hubs. In some cases, at least some of the devices 32 may be IoT devices. In some cases, each of the devices 32 may be IoT devices. In some embodiments, the supervisor 28 may be an instance of a lightweight web-based supervisor, as described herein. For example, the supervisor 28 may be an instance of a lightweight web-based supervisor that is configured to execute on a device 29 such as any one or more of the hubs 14, 1a6, 18 and/or on a dedicated device (e.g., a dedicated PC), as described herein. For instance, the supervisor 28 may be an instance of a lightweight web-based supervisor that is downloaded to or otherwise provided to the device 29 (e.g., a hub) and that can be executed by the device 29 in accordance with various aspects of automatically provisioning an instance of a lightweight supervisor in a wireless mesh network, as described herein. These are just examples.

In some cases, the supervisor 28 may be manifested as a building management system (BMS) supervisor. Generally, a BMS supervisor may be implemented to facilitate an organization interacting with its building management system. The BMS supervisor may include graphics pages, schedules, histories, trends, etc. for the building management system and devices thereof. A type of the BMS may vary, for instance, based on a size, footprint, and/or factor relevant to an organization. Examples of types of BMS include a single-site type, a multi-site type, and a cloud based deployment type. In a single site, a standalone deployment of a BMS supervisor may typically be installed on a premise of an organization location either as an embedded supervisor or installed on a computing device (e.g., a dedicated computing device) which may communicate with controllers and/or field devices. In a large site or multi-site type, deployment of the building management system supervisor may be at a data center so as to be scalable. In a cloud based deployment of a building management system supervisor, a portion of or the complete supervisor may be hosted in the cloud and may communicate with installed devices via one or more network connections.

Building management systems may include a system model of the building systems of one or more buildings. The system model may be utilized in different phases of using the building management system including, but not limited to an installation phase, an engineering phase, a commissioning phase, an operation phase, a maintenance phase, and/or one or more other suitable phases of using the building management system. In some cases, the system model may facilitate field technicians with installing and/or configuring building devices (e.g., gateways (e.g., a plant controller), controllers, thermostats, smart sockets etc.) that may be responsible for controlling building equipment (e.g., VRF systems, AHUs, lighting, etc.). Building devices and building equipment may referred to herein collectively as devices, equipment, and/or devices and equipment.

In some embodiments, various configuration information 31 associated with devices (e.g., smart sockets) may be received by the supervisor 28. For instance, configuration information 31 for each device that is commissioned on a given network which is associated with the supervisor 28 may be received by the supervisor 28 and/or another entity that is provisioning the supervisor 28. Examples of the configuration information 31 include a make, a model, a location, a version number, a communication protocol, and/or other information associated with a respective device on a network.

In some embodiments, the configuration information 31 may be determined, via the BMS. That is, in some embodiments, one or more devices may be commissioned by a user employing a BMS and the configuration associated with the commissioned devices may be store in or is accessible by (e.g., the configuration data is stored in a cloud server) the BMS. However, in some embodiments the configuration information 31 associated with each commissioned device on a particular network such as a plurality of IoT devices (e.g., smart sockets) on a particular wireless mesh network may be determined by an application such as a commission application that is separate from a BMS. For example, the configuration information 31 associated with each commissioned device on a particular network may be determined via a commissioning application executing on a mobile device, as described herein.

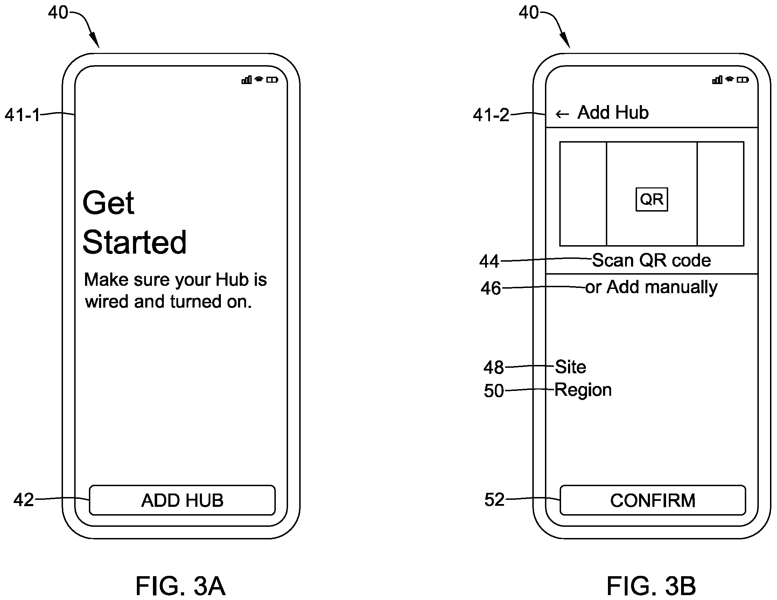

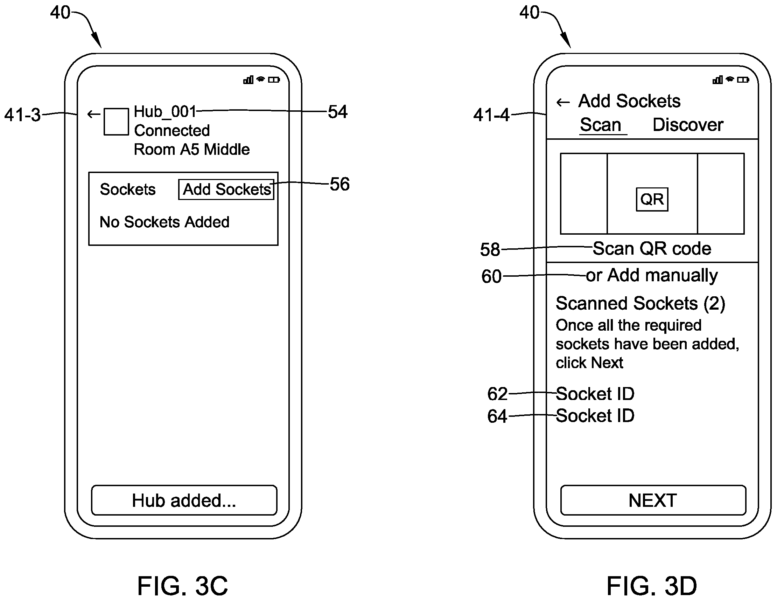

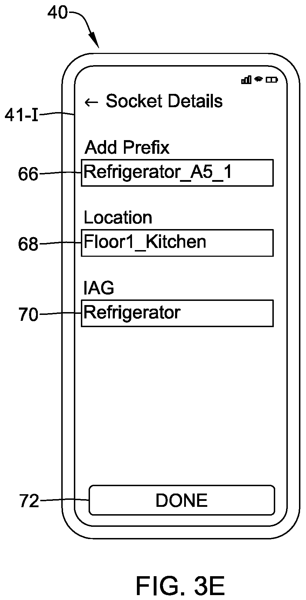

Figures 3A, 3B, 3C, 3D, and 3E are illustrative user interfaces 41-1, 41-2, 41-3, 41-4, and 41-1, respectively, of a mobile device 40 that together are suitable for commissioning devices in a wireless network. While a given quantity of user interfaces is illustrated, in some instances a larger quantity (e.g., more) or a reduced quantity (e.g., fewer) of user interfaces may be employed. In any case, together the user interfaces describe the commissioning of devices on a network (e.g., a wireless mesh network) that are not already commissioned on the network.

As illustrated in Figure 3A, the mobile device 40 can be a mobile phone. However, the mobile device 40 may be a different type of mobile device such as a tablet or other type of mobile device. The mobile device may be configured to execute a commissioning application that is suitable for commissioning devices in a network. For instance, the commissioning application may be suitable for commissioning devices in a wired and/or wireless network. In some instances, the commissioning application may be suitable for commissioning one or more devices in a wireless mesh network. For instance, the commissioning application may be configured to commission one or more hubs (e.g., one or more smart hubs) and/or one or more IoT devices in a wireless network (e.g., in a wireless mesh network). In some instances, the commissioned application can be the same application or a different application than the companion application, described herein.

The mobile device 40 may be configured to display user interfaces that may include various selectable icons, data fields, dropdown menus, and/or other components which may facilitate the input and/or display of data via the user interfaces. For instance, as illustrated in Figure 3A, a first user interface 41-1 may include an icon 42 which is selectable to add a hub (e.g., commission a hub). Responsive to selection of the icon 42, the mobile device 40 may be configured to display a second user interface 41-2.

As illustrated in Figure 3B, the second user interface 41-2 may include an icon such as an icon 44 which is selectable to scan a QR code, an icon 46 which is selectable to manually input information of a hub, icon 48 which is selectable to designate a site, icon 50 which is selectable to designate a region, and/or icon 52 which is selectable to confirm the input of information (e.g., responsive to the selection of one or more of the other icons in the second user interface 41-2). The approaches herein permit creating a device list for a facility, or replacing an existing device while also automatically populating basic mandatory details about the device in the system. The commissioning application may be used to configure, commission and checkout various devices like a smart input output (IO), a thermostat which controls BMS equipment like an air handling unit (AHU), lighting, smart sockets, variable flow refrigerant (VRF), a chiller, a pump, a boiler, lighting, and so forth. Each hardware/control device may be shipped from a factory to a customer with a unique two-dimensional code (e.g., a QR code) attached to the device in a sticker format. The description herein may refer to the QR code as an illustrative example. There may be other kinds of two-dimensional codes used in the present description. In some instances, a QR code may contain a high volume of data and describe device details, including but not limited to device type, for instance, a Model/SKU, device universal unique identifier (UUID), and so on, for each device that comes with it. Accordingly, the user may begin configuring the system for a facility or site by creating a logical list of devices that is required for complete configuration. A physical device UUID may be assigned to each logical device in the device list and further parameters may be configured as per a specification. During the creation of the device list, the user may be presented an option to scan the device QR code to add devices. On selecting the scan option (e.g., selecting icon 44), the tool may go into a QR code scanner mode, and prompt the user to scan the QR code sticker attached to the device. For example, the user may point a camera of the tool at the attached sticker and scan the QR code. Upon successfully scanning the QR code, the device details may be read into the tool. The tool may generate a default name for the device and automatically populate all the details read from the QR code into the respective fields in the device configuration user interface (UI). These details may include, but are not limited to, a device type, Model/SKU, device UUID, and so forth. The tool may also persist these details in a local database and/or in a hub. The user may use the QR code scanning approach even after the creation of the device list, in the device configuration step of the process. In case the user has created a logical device manually (e.g., selected icon 46), and wants to assign a physical device to it, the user may do so by scanning the QR code. Responsive to selection of the icon 52, the mobile device 40 may be configured to display a third user interface 41-3.

As illustrated in Figure 3C, the third user interface 41-3 may include an icon such as an icon 54 which displays information representative of a hub (e.g., information resulting from the scan of the QR code of the hub and/or the manually input of information in the second user interface 41-2) and icon 56 which is selectable to add a device such as an IoT device (e.g., a smart socket). Responsive to selection of the icon 56, the mobile device 40 may be configured to display a fourth user interface 41-4.

As illustrated in Figure 3D, the fourth user interface 41-4 may include an icon such as icon 58 which (similar to icon 44) is selectable to scan a QR code of an IoT device in a wireless network, an icon 60 which (similar to icon 46) is selectable to manually input information of the IoT device (e.g., a smart socket) in the wireless network, and icons 62, 64 corresponding to any IoT devices in the wireless network that have been previously commissioned by the commissioning application executing on the mobile device 40. In this manner, one or more IoT devices can be commissioned and may be associated with a given hub. Responsive to selection of the icon 62 or 64 configuration information such as a name/prefix 66 (e.g., "Refrigerator_A5_1"), a location 68 ("Floor1_Kitchen"), and/or a tag 70 (e.g., "Refrigerator") associated with a commissioned IoT device may be displayed via a fifth user interface 41-1, as illustrated in Figure 3E. Responsive to selection of icon 72 the method may be completed (e.g., is "Done"). That is, the icon 72 may be selected once some or all of the devices in a given network have been commissioned.

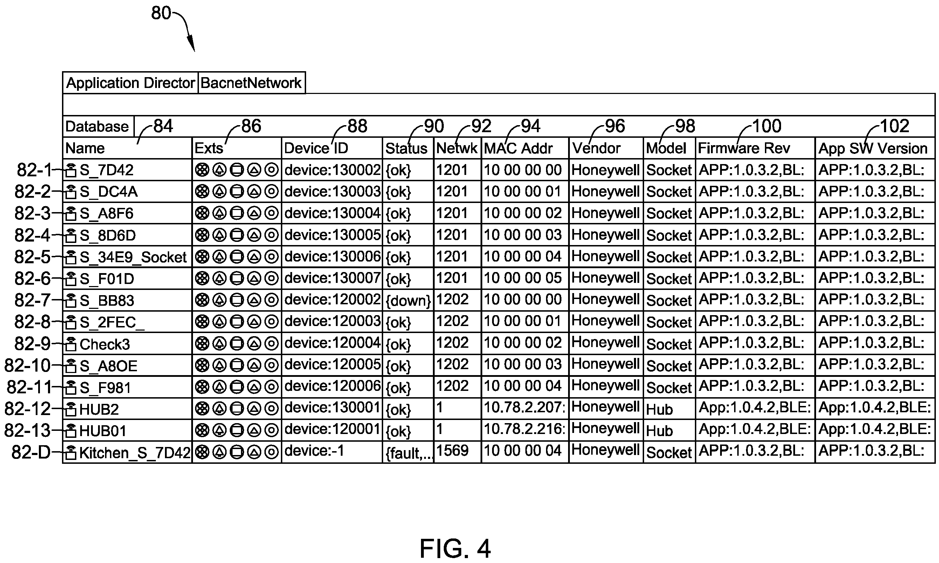

Figure 4 illustrates an example of a user interface 80 displaying configuration information of commissioned devices. The configuration information is suitable for provisioning an instance of a lightweight supervisor in a wireless network. As illustrated in Figure 4, in some instances the commissioned device can include commissioned IoT devices and commissioned hubs. For instance, a first commissioned device 82-1 and a second commissioned device 82-2 may be smart sockets and a third commissioned device 82-12 and a fourth commissioned device 82-13 may be hubs, as illustrated in Figure 4. The quantity, type, and/or configuration information of the commissioned devices, etc. may be varied.

In some embodiments, the configuration information may include one or more of: a type of the one or more commissioned devices, a type of extension associated with the one or more commissioned devices, a device identifier associated with the one or more commissioned devices, a network associated with the one or more commissioned devices, a vendor of the one or more commissioned devices, a make a type of the one or more commissioned devices, a model of the one or more commissioned devices, a version of firmware installed on the one or more commissioned devices, and a version of an application installed on the one or more commissioned devices. That is, the configuration information may be specific to the one more commissioned devices on a given network. For instance, as illustrated in Figure 4, the configuration information may include a name 84, an extension 86, a device identifier (ID) 88, a status 90 (e.g., ok, down, etc.), a network 92, a MAC address (Addr) 94, a vendor 96, a model 98, a firmware version (Rev) 100, an application software (SW) version 102, and/or other configuration information for each commissioned device of a plurality of commissioned devices.

The configuration information may be provided from a commissioning application executing on a mobile device and/or from a BMS to the lightweight supervisor (e.g., an instance of a lightweight supervisor that is executing on one or more hubs or one or more computing devices such as a PC) that is connected to the wireless network including a plurality of commissioned devices. For instance, the one or more of the commissioned devices in the wireless network may be configured as a web-server that hosts the instance of the lightweight web-based supervisor. For example, the one or more commissioned devices that is configured as the web-server may be a hub or may be a computing device (e.g., a PC). That is, in some embodiments, the one or more commissioned devices that is configured as the web-server is a hub. For instance, the one or more commissioned device that is configured as the web-server that hosts the instance of the lightweight web-based supervisor may be an individual (e.g., a single) hub). In some embodiments, the individual hub may a first hub included in a plurality of hubs. In such embodiments, the first hub (e.g., hub 16 as illustrated in Figure 1) may be configured to as a master hub which controls a second hub (e.g., hub 18) included in the plurality of hubs, a sub-set of the one or more commissioned devices (e.g., IoT devices 24a, 24b, 24c, as illustrated in Figure 1) associated with the second hub, or both. Yet, in some embodiments the one or more commissioned devices that is configured as the web-server may be a dedicated computing device (other than a hub) such as a personal computing device (e.g., a laptop, a desktop, etc.).

In any case, the instance of lightweight web-based supervisor (e.g., a copy of the lightweight web-based supervisor) can include information configured to be displayed as a dashboard or via other user interface that is directly accessible (e.g., via a browser in a user interface of a hub and/or PC on which the lightweight web-based supervisor is installed) or remotely accessible (via a web browser on another device other than the hub and/or PC on which the lightweight web-based supervisor is installed). For instance, in some instances a hub and/or PC may be configured to display a user interface which is configured to display a dashboard of the instance of the lightweight web-based supervisor. The hub and/or PC may be configured to display a dashboard that is based on the configuration information of the one or more commissioned devices in the network. In this way, the dashboard may be customized or tailored based at least on the configuration information associated with commissioned devices in a given network to a dashboard (e.g., a predetermined dashboard) associated with the configuration information.

Accordingly, the approaches herein can permit tailored control and supervision of the particular commissioned devices (e.g., based on a type, model, firmware version, etc.) of the commissioned devices via a dashboard of an automatically provisioned lightweight supervisor (e.g., that does not require the manual input of information to be provisioned). For instance, the configuration information of the commissioned devices may be automatically received by the instance of the lightweight web-based supervisor in a network, as detailed herein. For example, the configuration information of the commissioned devices may be automatically received by the instance of the lightweight web-based supervisor prior to or responsive to automatically discovering an installation or initial execution of the instance of the lightweight web-based supervisor on the one or more commissioned devices in the network. Thus, as detailed herein, the instance of the lightweight web-based supervisor may be automatically provisioned based at least on the configuration information of the one or more commissioned devices.

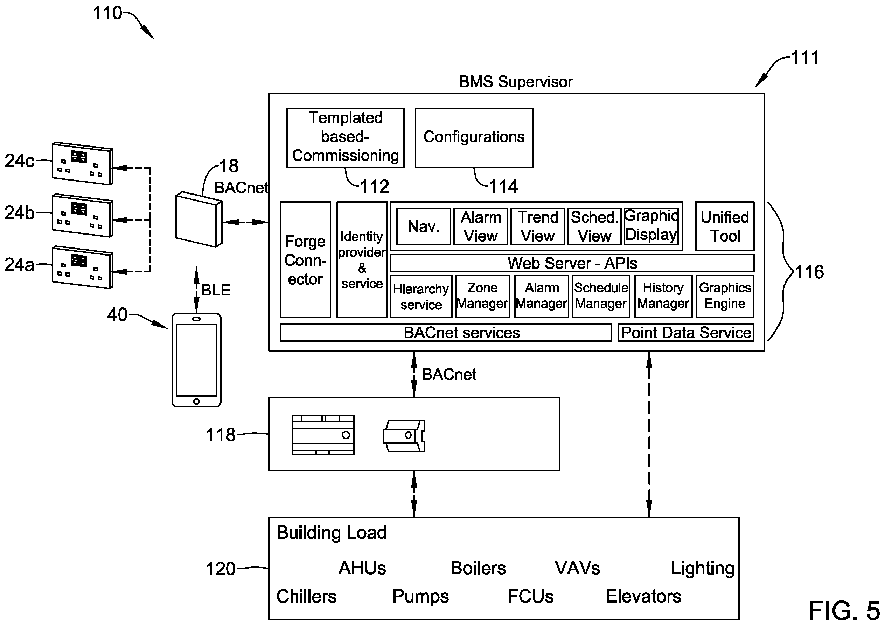

Figure 5 illustrates a schematic view of an illustrative system 110 suitable for automatically provisioning an instance of a lightweight supervisor 111 in a device in a wireless network. As illustrated in Figure 5, the system 100 may include a lightweight supervisor 111 in the form of a BMS supervisor, one or more BACnet devices 118, one or more building loads 120, one or more IoT devices such as a hub 18 and smart sockets 24a, 24b, 24c, and a mobile device 40. The hub 18 and smart sockets 24a, 24b, 24c may be analogous to or similar to the hub 18 and smart sockets 24a, 24b, 24c described with respect to Figure 1. The mobile device 40 may be analogous or similar to the mobile device 40 describe with respect to Figures 3A-3E. In some cases, the hubs are in wired communication with the supervisor. In some cases, the hubs may communicate with the supervisor over a BACNET network.

The lightweight supervisor 111 may be an instance (e.g., an individual copy of) of a lightweight web-based supervisor. For instance, the lightweight web supervisor 111 may be an instance of a lightweight web-based supervisor that is downloaded or otherwise installed on a device such as a hub or a PC, as described herein. For example, the instance of a lightweight web-based supervisor may be downloaded or installed on a hub or PC that is configured as a web-server to host the instance of a lightweight web-based supervisor thereon. The lightweight supervisor 111 may include various templates 112 and/or configurations 114 of the supervisor 111 and/or of the one or more devices coupled to the supervisor 111. The lightweight supervisor 111 may include various components 116 to permit communication with and/or alteration of configurations of one or more devices coupled to the lightweight supervisor 111. In some instances, the components 116 may include components in a Niagara workbench (e.g., a Niagara integration platform).

The one or more BACnet devices 118 may include controllers or other devices that are configured to be coupled to the lightweight supervisor and monitor and/or control operation of building loads 120. Examples of the one or more building loads 120 include chillers, air handling units (AHU), pumps, boilers, Roof top units (RTU), variable refrigerant flow (VRF/VRV) systems, a fan cooling unit (FCU), variable air volume (VaV) system, lighting, boiler, air handling unit, and so on.

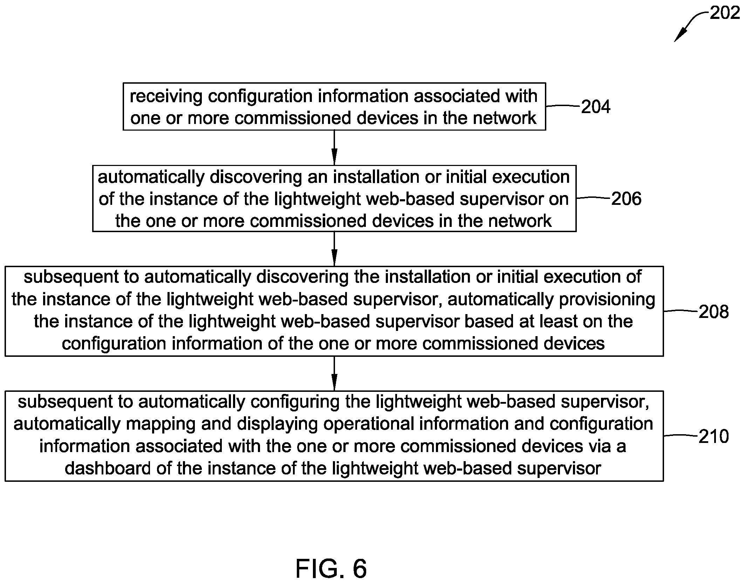

Figure 6 is a flow diagram showing an illustrative method 202 for provisioning an instance of a lightweight supervisor in a wireless network. The method 202 includes receiving configuration information associated with one or more commissioned devices in the wireless network, as indicated at block 204. Examples of BLE (Bluetooth Low Energy) Configuration settings include pan_id and key. Examples of Ethernet Configuration settings include Ethernet Mode, 0-dhcp, 1-static-IP, IP address, gateway address and IP mask. Examples of BACnet Configuration settings include Network number, Device instance, Port number, BBMD, BBMD TTL, and Hub replacement timeout value. Examples of Hub Configuration settings include Name, Reference and Location. Examples of Socket Configuration settings, which are included for every smart socket, include Mac, Name, IPV6 address, Shadow RAM Index and Location. The configuration parameters may be received by a hub, a mobile device (e.g., mobile device 40) and/or another device such as a desktop, a laptop, a tablet, a server, or an all-in-one (AIO) computing device, and wherein the desktop, the laptop, the tablet, the server, or the all-in-one (AIO) computing device that is coupled to the wireless network. The configuration parameters may be received subsequent to commissioning of the one or more commissioned devices in the wireless network. For instance, the configuration parameters may be transmitted (e.g., from a commissioning application) to another device (e.g., a hub) that stores the commissioning parameters responsive to commissioning the one or more commissioned devices in the network.

The method 202 includes automatically discovering an installation or initial execution of the instance of the lightweight web-based supervisor on the one or more commissioned devices in the network, as indicated at block 206. As used herein, an instance of a lightweight web-based supervisor refers to an individual copy of a lightweight web-based supervisor application. For instance, the method 202 may include automatically discovering the download of an instance of the lightweight web-based supervisor via the wireless network to one or more of the commissioned devices (e.g., a hub). However, in some instances the software instance of the lightweight web-based supervisor may be previously installed (e.g., at a point of manufacture, at a point of distribution, or otherwise) on the one or more commissioned devices and the method 202 may include automatically discovering an initial execution (e.g., a request for authorization information, any version updates, etc.) and/or other information that is communicated via the wireless network responsive to the initial execution of the instance of the lightweight web-based supervisor. It is noted that the automatic discovery may occur in the absence of any manual inputs to the one or more commissioned devices and/or automatically in the absence any manual inputs to the one or more commissioned devices subsequent to a manual input associate with an installation or an initial execution of the instance of the lightweight web-based supervisor.

The method 202 includes automatically provisioning the instance of the lightweight web-based supervisor based at least on the configuration information of the one or more commissioned devices, as indicated at block 208. For instance, the method 202 may include automatically provisioning the instance of the lightweight web-based supervisor based at least on the configuration information of the one or more commissioned devices subsequent to automatically discovering the installation or initial execution of the instance of the lightweight web-based supervisor. Thus, the methods herein permit automatically provisioning and tailoring an installed instance of a lightweight supervisor to facilitate management of the one or more commissioned devices. As mentioned, the configuration information may be obtained from a commissioning application executing on a mobile device, among other possibilities. Thus, the approaches herein may reduce an amount of time to onboard an installed instance of a lightweight supervisor, may eliminate errors associated with manually onboarding the supervisor, and/or may reduce costs associated with the onboarding and/or operation of the supervisor (e.g., the lightweight supervisor may be employed in the absence of a gateway, in the absence of a dedicated on-site computer (e.g., PC)).

The method 202 includes displaying operational information and configuration information associated with the one or more commissioned devices via a dashboard of the instance of the lightweight web-based supervisor, as indicated at 210. For instance, the method 202 may include automatically displaying operational information and configuration information associated with the one or more commissioned devices via a dashboard of the instance of the lightweight web-based supervisor subsequent to automatically configuring the lightweight web-based supervisor. For example, the real-time operational information and the current configuration information associated with the one or more commissioned devices may be displayed via a dashboard that has been tailored to the particular types/configuration information of the one or more commissioned devices, as detailed above. The automatic provisioning at 208 and the automatic display 210 may each occur in the absence of any manual inputs to the one or more commissioned devices and/or automatically in the absence any manual inputs to the one or more commissioned devices subsequent to a manual input associate with an installation or an initial execution of the instance of the lightweight web-based supervisor.

The dashboard may provide a summary of information derived from the plurality of smart sockets. The smart sockets may capture information related to the smart sockets, such as power consumption, connectivity and various alarms. This information may be displayed on a dashboard. The dashboard may display information for an entire building, a portion of a building, or even a summary of multiple buildings. The dashboard may be considered as being divided into several area and/or include several icons, as is generally understood.

The dashboard may be displayed in a browser (e.g., web-browser) via a user interface of an on-site device such as a hub or PC. However, in some embodiments, the dashboard may be displayed remotely. For instance, the system herein may employ an off-premise internet cloud and that may be employed with a VPN, etc., to remotely displayed the dashboard on devices located outside of the wireless network. In some instances, the browser may display a dashboard that includes some or all of a Niagara workbench.

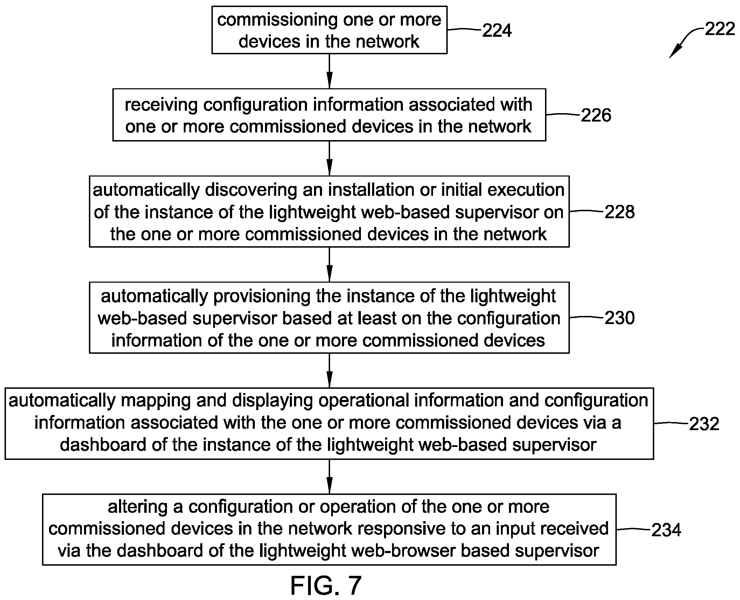

Figure 7 is a flow diagram showing an illustrative method 222 for provisioning an instance of a lightweight supervisor in a wireless network. The method 222 includes commissioning one or more devices in the network, as indicated at 224. As mentioned, the one or more device in the network may be commissioned via a commissioning application executing on a mobile device, among other possibilities.

The method 222 includes receiving configuration information associated with one or more commissioned devices in the network, as indicated at 226. As mentioned, one or more devices in the wireless network may receive (e.g., and store) the configuration information.

The method 222 includes automatically discovering an installation or initial execution of the instance of the lightweight web-based supervisor on the one or more commissioned devices in the network, as indicated at 228. As mentioned, the method 222 may include automatically discovering the installation or execution of the instance of the lightweight web-based supervisor subsequent to commissioning the one or more devices.

The method 222 includes automatically provisioning the instance of the lightweight web-based supervisor based at least on the configuration information of the one or more commissioned devices, as indicated at block 230. The method 222 includes automatically mapping and displaying operational information and configuration information associated with the one or more commissioned devices via a dashboard of the instance of the lightweight web-based supervisor, as indicated at block 232. The method 222 includes altering a configuration or operation of the one or more commissioned devices in the network responsive to an input received via the dashboard of the lightweight web-browser based supervisor, as indicated at block 234.

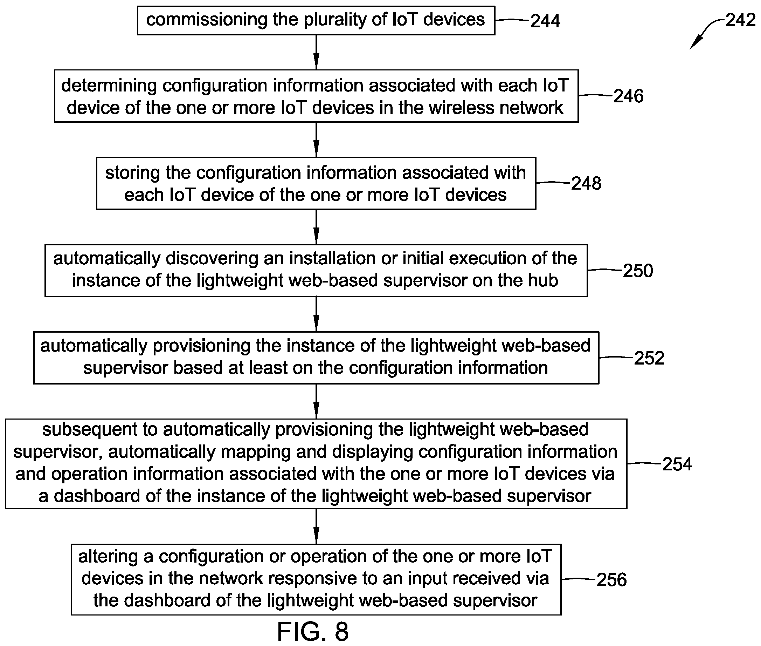

Figure 8 is a flow diagram showing another illustrative method 242 for provisioning an instance of a lightweight supervisor in a wireless network. The method 242 may be employed with an instance of the lightweight web-based supervisor that is operatively discoverable and configurable based on configuration information of a plurality of internet-of-things (IoT) devices in the wireless network. In some instances, the plurality of IoT devices may be wireless coupled via the wireless network to one or more hubs. In some instances, the one or more hubs are configured as a web server.

The method 242 includes commissioning the plurality of IoT devices, as indicated at block 244. The method 242 includes determining configuration information associated with each IoT device of the one or more IoT devices in the wireless network, as indicated at block 246. The method 242 includes storing the configuration information associated with each IoT device of the one or more IoT devices, as indicated at block 248. As mentioned, the configuration information may be stored in a hub, among other possibilities. In some instances, the configuration information may be stored in a hub includes in a system that is without a gateway (e.g., the configuration information is not stored in a gateway). That is, in some instances the methods herein may be employed in the absence of a gateway. Employing the methods herein in the absence of a gateway may be reduce the cost and/or complexity of the systems and/or otherwise improve the function of the one or more commissioned devices and/or improve the function of the instance of the lightweight web-based supervisor.

The method 242 includes automatically discovering an installation or initial execution of the instance of the lightweight web-based supervisor on the hub, as indicated at 250. The method 242 includes automatically provisioning the instance of the lightweight web-based supervisor based at least on the configuration information, as indicated at block 252. In some instances, automatically provisioning the lightweight web-based supervisor further comprises one or more of automatically installing the lightweight web-based supervisor, automatically licensing the lightweight web-based supervisor, automatically installing drivers associated with the lightweight web-based supervisor, automatically building a list of the one or more devices in the network, automatically configuring a history associated with the one or more IoT devices in the network, automatically configuring alarms associated with the one or more IoT devices in the network; and automatically configuring alarms associated with the one or more IoT devices in the network.

The method 242 includes automatically mapping and displaying configuration information and operation information associated with the one or more IoT devices via a dashboard of the instance of the lightweight web-based supervisor, as indicated at block 254. Automatically mapping and displaying information associated with the one or more IoT devices further may include determining a hierarchy of the one or more IoT devices in a dashboard of the lightweight web-based supervisor and displaying the hierarchy of the one or more IoT devices in the dashboard of the lightweight web-based supervisor. For instance, the hierarchy may define associations between one or more hubs and one or more IoT devices associated therewith, among other possibilities.

In some instances, automatically mapping and displaying information associated with the one or more IoT devices may include determining a predetermined dashboard associated with the one or more IoT devices in a dashboard of the lightweight web-based supervisor and displaying the information associated with the one or more IoT devices in the predetermined dashboard of the lightweight web-based supervisor. The preconfigured dashboard may be selected based on one or more of the configuration information associated with the one or more commissioned devices. For instance, the preconfigured dashboard may be downloadable to the instance of the supervisor and/or may be installed along with a plurality of preconfigured dashboards installed in otherwise accessible by the instance of the lightweight browser based supervisor.

The method 242 includes altering a configuration or operation of the one or more IoT devices in the network responsive to an input received via the dashboard of the lightweight web-based supervisor, as indicated at 256. For instance, the method 242 may alter a configuration of one or more smart sockets. Each smart socket is configured to receive an electrical plug from a corresponding electrical appliance and each smart socket is configured to wirelessly report one or more power parameters of power delivered by the smart socket from the power line network to the corresponding electrical appliance.

In some cases, the method 242 may further include wirelessly transmitting one or more commands to one or more other of the plurality of smart sockets, and in response, each of the one or more other of the plurality of smart sockets altering a configuration thereof. It will be appreciated that there are a number of different configuration settings that a user may wish to edit. In some cases, because there are a number of configuration settings that can be set (or incorrectly set), the user may wish to simply reset to a set of factory defaults. Examples of BLE (Bluetooth Low Energy) Configuration settings include pan_id and key. Examples of Ethernet Configuration settings include Ethernet Mode, 0-dhcp, 1-static-IP, IP address, gateway address and IP mask. Examples of BACnet Configuration settings include Network number, Device instance, Port number, BBMD, BBMD TTL, and Hub replacement timeout value. Examples of Hub Configuration settings include Name, Reference and Location. Examples of Socket Configuration settings, which are included for every smart socket, include Mac, Name, IPV6 address, Shadow RAM Index and Location.

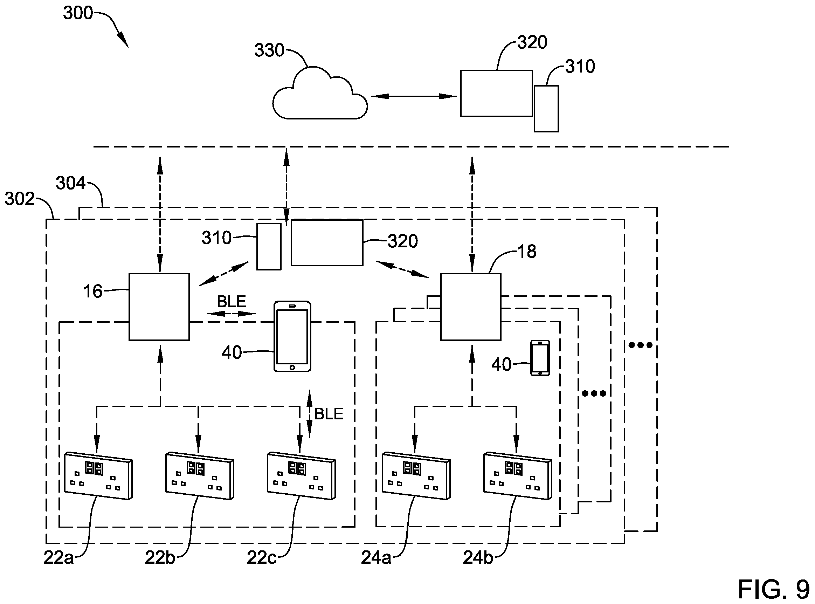

Figure 9 is a schematic view of an illustrative system 300 suitable for automatically managing equipment groups and schedules via an instance of a lightweight web-based supervisor. In some instances, the schedule for a given device and/or given group of devices may correspond to one or more of a weekly schedule, a holiday schedule, and/or a specific event (e.g., an exception) schedule, among other possible types of schedules.

The system 300 can include various components that are deployed in one or more sites. For instance, the system 300 can include a first site 302 ("Customer site 1") and a second site ("Customer site 2"). This sites can include a plurality of devices such as one or more commissioned devices. The one or more devices may be commissioned as described herein. As illustrated in Figure 9, the first site 302 can include hubs 16, 18, as described herein. The hubs 16, 18 can be associated with smart sockets, as described herein. For instance, the hub 16 can be associated with smart sockets 22a, 22b, and 22c, while the hub 18 can be associated with smart sockets 24a and 24b, etc.

The lightweight web-based supervisor may be an instance (e.g., an individual copy of) of a lightweight web-based supervisor. For instance, the lightweight web-based supervisor may be an instance of a lightweight web-based supervisor that is downloaded or otherwise installed on a device such as a hub or a PC, as described herein. For example, the instance of a lightweight web-based supervisor may be downloaded or installed on a hub such as hub 16 and/or hub 18 or a PC such as PC 320 that is configured as a web-server to host the instance of a lightweight web-based supervisor thereon.

As illustrated in Figure 9, the PC 320 may be located on-site at a customer site (e.g., in the form of the PC 320 depicted within the first site 302) or may be located remote to a customer site (e.g., in the form of the PC 320 depicted external to the sites) and may be coupled to one or more customer sites via the internet. As detailed herein, the mobile device 40 may be configured with an application to perform various functions such as those associated with automatically provisioning (e.g., automatically onboarding) an instance of a lightweight supervisor and/or automatically managing equipment schedules via an instance of a lightweight web-based supervisor, as detailed herein. The mobile device 40 may be located on-site at a customer site (e.g., in the form of the mobile device 40 depicted within the first site 302) or may be located remote to a customer site (e.g., in the form of the mobile device 40 depicted external to the sites) and may be coupled to one or more customer sites via the internet. For instance, the mobile device 40 and/or the PC 320 may be located remote to the customer sites and may be coupled to a remote building management application (e.g., a companion application) or system 330 configured to remotely manage aspects of the one or more customer sites. That is, the one or more sites may be managed by a building management system such as a multi-site building management system.

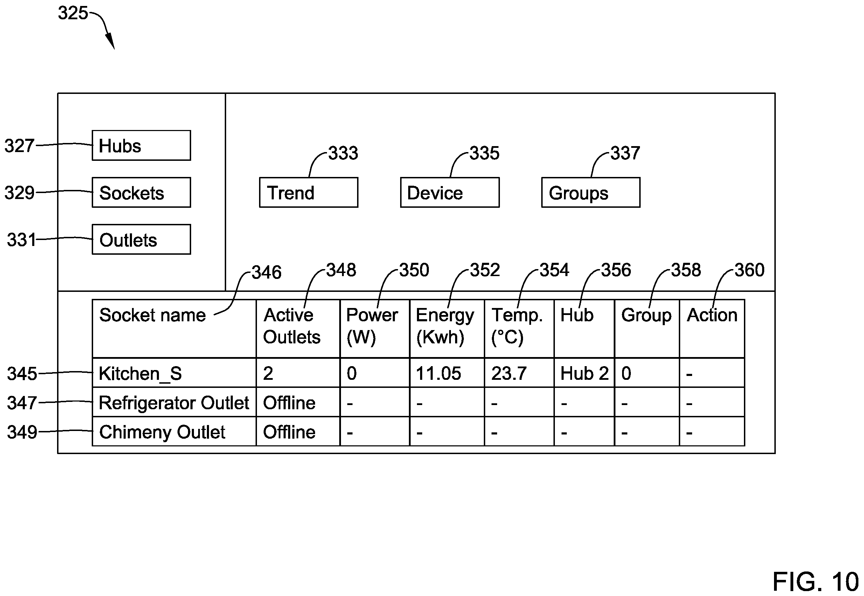

Figure 10 is an example of a dashboard 325 displaying operating information and groups of commissioned devices. The commissioned devices may include hubs 327, sockets 329, and outlets 331, among other possible types of commissioned devices.

The dashboard 325 may be configured to display various information associated with the one or more commissioned devices. For instance, the dashboard may configured to display an aggregate quantity of alarms associated with the hubs 327, display an aggregate quantity of alarms associated with the sockets 329, and/or an aggregate quantity of alarms associated with the outlets 331, among other information. For example, the dashboard 325 may be configured to display an equipment group associated with the one or more commissioned devices in the network, an equipment schedule associated with the one or more commissioned devices in the network, or both.

As mentioned, the dashboard 325 may be displayed via a user interface of one or more commissioned devices in the network and/or may be displayed via a user interface (e.g., via a web-browser) of a device located remote from the network. For instance, the dashboard 325 or a representation of some or all of the aspects thereof may be displayed via a hub, mobile device, and/or or PC in the network. However, in some instances, the dashboard 325 or a representation of some or all of the aspects thereof may be displayed via a PC or mobile device that is located remote from the network (e.g., is coupled via the internet and/or a remote computing session to the network and/or one or more commissioned devices such as a hub in the network). Accordingly, the information (e.g., equipment schedules and/or equipment groups) associated with the one or more devices may be monitored and controlled on-site and/or remotely.

While generally described herein as being applicable to one or more commissioned devices across an individual (e.g., single site) the approaches herein are not so limited. Rather, in some embodiments the approaches herein may scale to a plurality of sites and allow equipment schedules and equipment groups associated with the one or more commissioned devices to be controlled locally or remotely in one or more sites. In either case, the approaches herein may reduce or eliminate manual operations that are typically performed to associate a commissioned device with a given equipment group and/or a given equipment schedule. For instance, in some embodiments the approaches herein may automatically determine a given equipment group and/or given equipment schedule (e.g., corresponding to the given equipment group, corresponding to a given site location and/or a location within the given site, etc.). For example, each IoT device (e.g., each smart socket) in a given network may automatically have a default schedule determined therefore. In some instances, the default schedule may be automatically associated with the IoT device such that the IoT device is operated in accordance therewith. However, in some embodiments the default schedule may be displayed as a suggested schedule (e.g., via a user interface of one or more commissioned devices and/or via a user interface of a mobile device) and permit a user to confirm or other associate the IoT device with a different equipment schedule. Additionally, in some embodiments the approaches herein may permit modification of the current schedule. For instance, the current schedule may be displayed via a user interface of one or more commissioned devices (e.g., a hub), a PC, or a mobile device and permit modification of the equipment schedule by a user. In some embodiments, the equipment schedules (e.g., predetermined equipment schedules corresponding to a particular site location, type of equipment, etc.) may be display. Thus, the equipment schedules may be manually created, updated, and/or deleted by a user, in some instances. For instance, the equipment schedules, along with other information, may be displayed via the dashboard 325.

The dashboard 325 may display various trends (e.g., energy consumption and/or use trends, etc.) responsive to selection of a trend icon 333. The dashboard 325 may display various devices (e.g., each commissioned device in a network, etc.) responsive to selection of a devices icon 335. The dashboard 325 may display various equipment groups (groups) (e.g., each created equipment group associated with a given site or a given enterprise, etc.) responsive to selection of a group icon 337.

For instance, as illustrated in Figure 10, the dashboard 325 may display various operation informational, configuration information, associated groups and/or associated schedules of the one or more commissioned devices such as commissioned IoT devices in a network. Each commissioned IoT device 345 (e.g., each smart socket) may include a plurality of sub-devices 347, 349 (e.g., receptacles) that is represented in the dashboard 325. The dashboard 325 may display name 346, a quantity of active outlets 348, a quantity of power 350 (e.g., watts) associated with the quantity of active outlets, an amount of energy associated with the quantity of active outlets 352, a temperature 354 of the commissioned IoT device, a hub 356 associated with the commissioned IoT device, an equipment group 358 (e.g., cafeteria or kitchen group, etc.) associated with the commissioned IoT device, and any pending actions 360 associated with the commissioned IoT device, among other information.

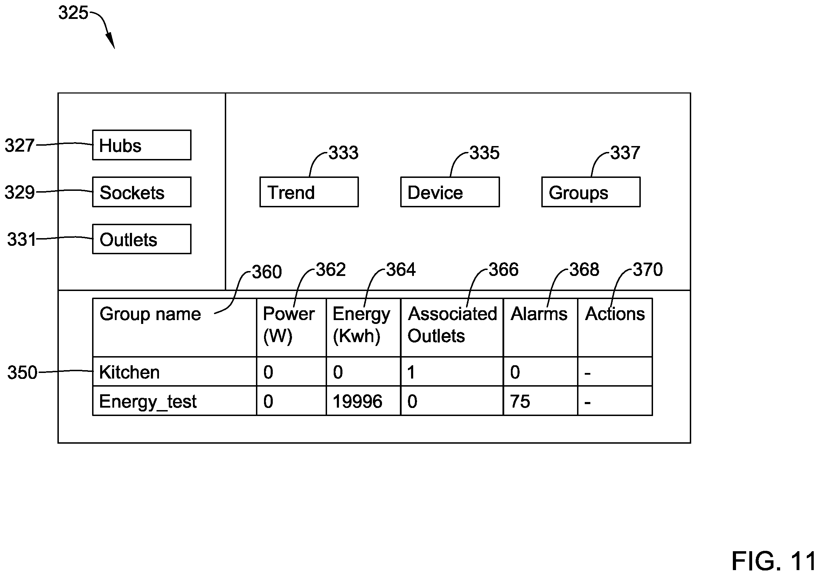

Figure 11 is an example of a dashboard 325 displaying operating information and groups of commissioned devices. The dashboard 325 in Figure 11 is analogues to the dashboard 325 in Figure 10, but which the change that the dashboard 325 in Figure 11 is illustrated as displaying various equipment groups (groups) rather than the devices displayed in Figure 10. The equipment groups may be displayed responsive to selection of a group icon 337. As illustrated in Figure 11, the dashboard may display various group names 360, a quantity of power consumed by the group 362, a quantity of energy consumed by the group 364, associated devices 366 such as outlets in the group, a quantity of alarms 368 in the group, and any pending actions 370 for each group such as a first group ("Kitchen") 350.

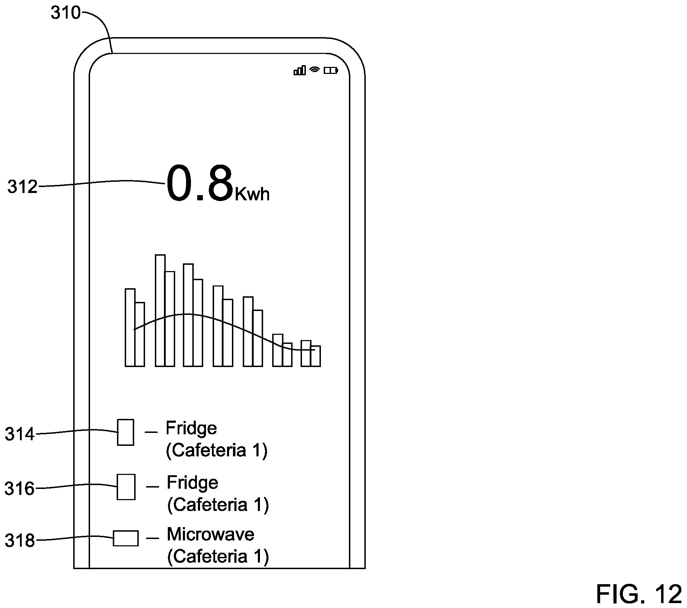

Figure 12 is an example of a user interference 310 of an application executing on the mobile device 40. As illustrated in Figure 12, the user interface 310 may include various information associated with one or more commissioned devices. For instance, an amount of energy consumption 312 by the one or more commissioned devices may be displayed. The amount of energy consumption 312 may be a real-time energy consumption rate and/or a historical (e.g., weekly, yearly, monthly, etc.) energy consumption rate. The amount of energy consumption 312 may be displayed for an individual commissioned device or a group of commissioned devices. For instance, as illustrated in Figure 12, the energy consumption 312 may be an aggregate energy consumption for an equipment group ("cafeteria") including a plurality of commissioned devices (e.g., a first fridge 314, a second fridge 316, and a microwave 318, etc.) therein.

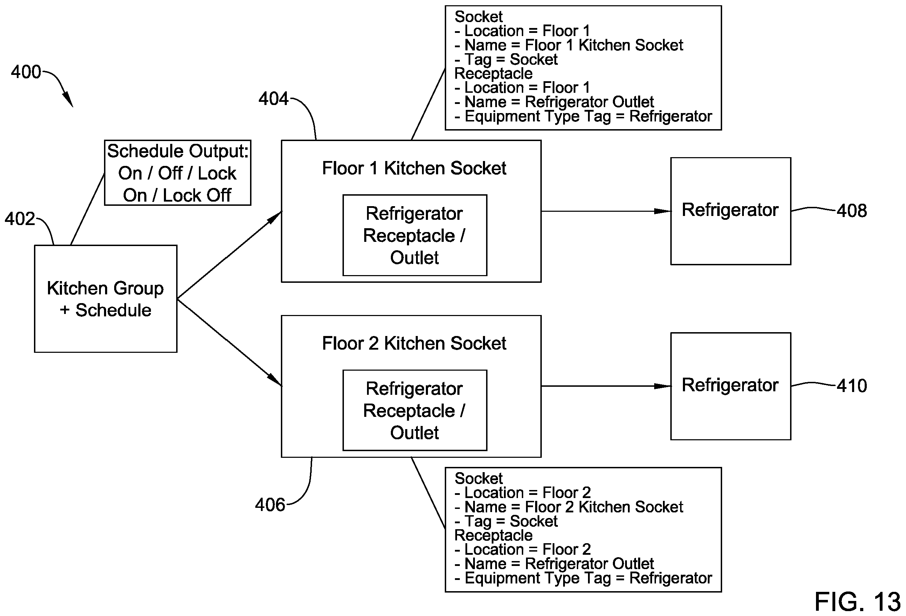

Figure 13 is a block diagram 400 of an example of equipment group creation and equipment scheduling. A plurality of equipment groups and schedules may be created and stored. For instance, the equipment groups and/schedules may be manually created or may be automatically created (e.g., based on history usage, types of equipment detected, etc.). For example, a "kitchen" group and a corresponding "kitchen" equipment schedule may be created, as indicated at 402. The "kitchen" equipment schedule may include schedule on/off times, schedule set points (e.g., schedule temperatures of refrigerators), schedule lock/unlock times, among other types of information. Continuing with the above example, in some instances a given building (e.g., an office building) may have a plurality of floors (e.g., a 20-story building). Each floor may have one or more kitchens. Each kitchen may have one or more refrigerators, one or more microwaves, etc. In such an example, each of the devices (e.g., one or more refrigerators, one or more microwaves, etc.) may be included in a kitchen group. For instance, each of the devices may be automatically assigned by the lightweight supervisors herein to the kitchen group based on a type of equipment (e.g., a refrigerator) and/or a location of the device (e.g., connected to a smart socket that is designated as being in a kitchen), etc. For example, as illustrated at 404 and 406 a smart sockets may be tagged as a given type of device (e.g., socket) and/or may be associated with a given location (e.g., Floor1 kitchen socket). At 408 and 410, a device (e.g., a refrigerator) may be automatically associated with a equipment group (e.g., refrigerator) by the lightweight supervisors. For instance, the device may be automatically associated by the lightweight supervisors with the equipment group based on configuration information of the device itself and/or based on the configuration information of a smart socket and/or receptacle that powers the device. Subsequent to automatically associating the device to the equipment group, the lightweight supervisor can automatically associate the device with a corresponding equipment schedule. For instance, each device associated with the "kitchen" group may be associated with the same corresponding schedule. However, in some instances, different types of device and/or devices at different locations within the "kitchen" group may be associated with different equipment schedules.

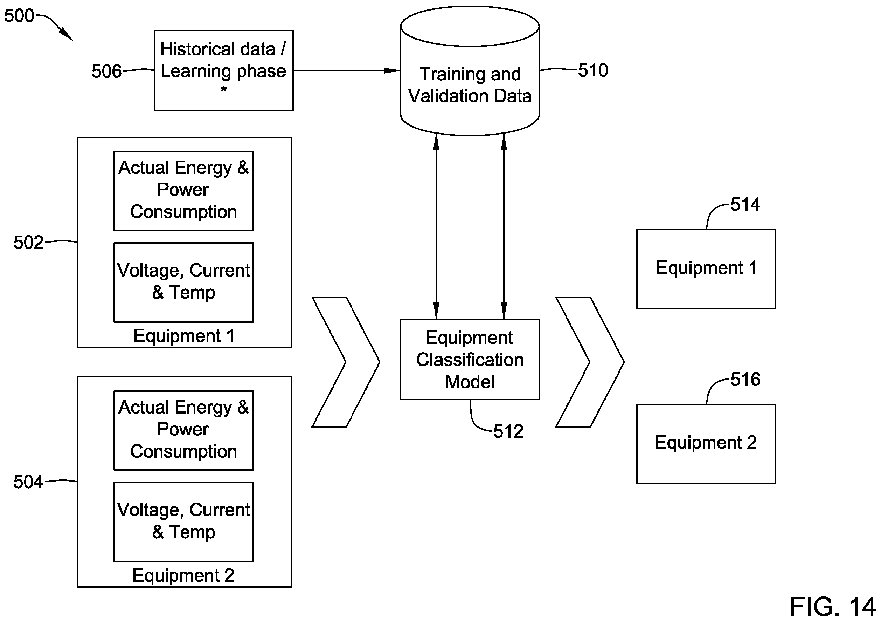

Figure 14 is a block diagram 500 of an example of equipment detection. As mentioned, a type and/or location of equipment and/or other configuration information associated with one or more commissioned devices can be determined during commissioning, as described herein. However, devices may be added to a network after the initial commissioning of devices in the network. In such instances, the configuration information of the added device may be determined automatically by the lightweight supervisors herein. For example, the configuration information of the added device may be determined in the absence of a commissioning application. For instance, the lightweight supervisor herein may be configured to automatically detect a presence of an additional device that is added to a wireless network and responsive to the detection may be configured to automatically determine an equipment type of the detected additional device. The lightweight supervisor may be configured to automatically determine the presence of an additional (e.g., non-commissioned) device on a network such as wireless network responsive to receipt of information (e.g., packets) indicative of the present of the additional device on the network. The lightweight supervisor may be configured to automatically associate the automatically determined equipment type (e.g., refrigerator) with an equipment group (e.g., the "kitchen" group) and a corresponding equipment schedule that corresponds to the equipment group. For instance, the lightweight supervisor may detect an on/off pattern, a maximum or minimum amount of energy consumption over a period of time, and/or detect energy consumption patterns, among other information specific to the additional device, to determine the equipment type of the additional device. In this way, the lightweight supervisor may initially automatically associate one or more commissioned devices with a equipment group and equipment schedule (e.g., based on configuration information of the one or more commissioned devices), and yet may be configured to automatically detect and associate additional devices with an applicable equipment group and a corresponding equipment schedule.

For example, in some instances the lightweight supervisor may include a machine learning model or other entity that can be trained to automatically identify configuration information (e.g., a type of equipment) of additional information. For instance, as illustrated in Figure 14, the lightweight supervisor may be trained at 510 based on historical data 506 to identify a type of device. The training data may include energy and power consumption information associated with various types of devices, among other types of training data. The lightweight supervisor may receive actual energy and power consumption information associated with a first device ("Equipment 1"), as illustrated at 502. Similarly, the lightweight supervisor may receive actual energy and power consumption information associated with a first device ("Equipment 2"), as illustrated at 504. At 512, the lightweight supervisor may be configured to determine a type of equipment (e.g., based the training and training data) that corresponds to or most closely aligns with the actual energy and power consumption information of a device (e.g., the first device and the second device). At 514, the lightweight supervisor may be configured to automatically associate the one or more additional devices with a given device type (e.g., refrigerator) and to subsequently automatically associate the given devices with a equipment group and corresponding schedule, as detailed herein.

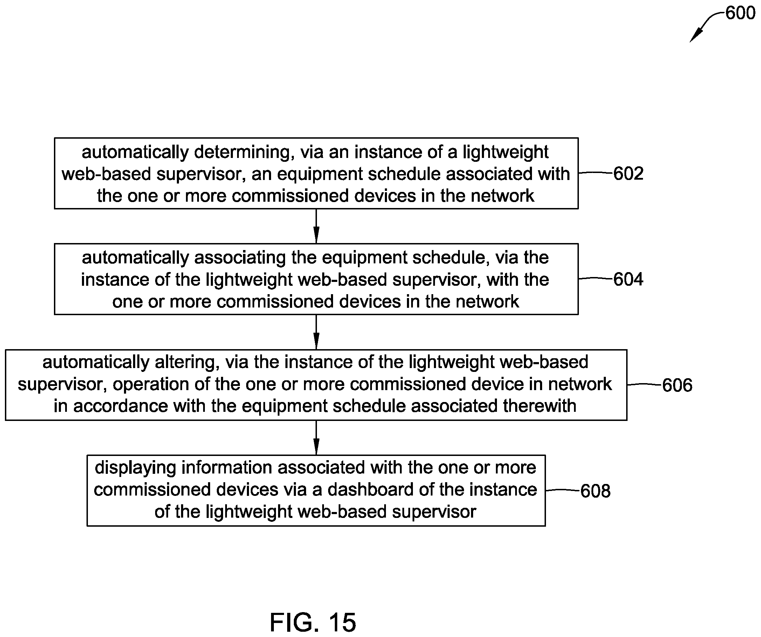

Figure 15 is a flow diagram showing an illustrative method 600 for automatically managing equipment schedules via an instance of a lightweight web-based supervisor. The method 600 includes automatically determining, via an instance of a lightweight web-based supervisor, an equipment schedule associated with the one or more commissioned devices in the network. For instance, the equipment schedule may be determined based at least on part on a type and/or a location of the one or more commissioned devices, as described herein. For example, the equipment schedule may be a particular predefined equipment schedule that corresponds to the type and/or a location of the one or more commissioned devices. The predefined equipment schedule stored in memory of the lightweight web-based supervisor or otherwise stored. For instance, an identifier associated with the predefined equipment schedule can be stored in a look-up table or other type of data structure in the lightweight web-based supervisor. In such instances, the lightweight web-based supervisor can determined an identifier of the particular equipment schedule stored in the look-up table or other data structure and may access and/or download the corresponding equipment schedule from a cloud server or other storage device. For instance, the equipment schedule can be downloaded to the light web-based supervisor and/or the one or more commissioned devices.

At 604, the method 600 includes automatically associating the equipment schedule, via the instance of the lightweight web-based supervisor, with the one or more commissioned devices in the network. For instance, the equipment schedule as determined at 602 may be automatically associated with the one or more commissioned devices in the network. For example, a particular identifier of a equipment group and/or an equipment schedule may be associated with the one or more commissioned devices in the network. In some instances, each of the one or more commissioned devices in the network can be associated with a corresponding equipment schedule.

At 606, the method 600 includes automatically altering, via the instance of the lightweight web-based supervisor, operation of the one or more commissioned device in network in accordance with the equipment schedule associated therewith. For instance, the operation of the one or more commissioned devices may be automatically altered in accordance with a given equipment scheduled associated therewith at 604. Alteration of the operation of the one or more commissioned devices may entail altering an on/off state, altering a set point (e.g., a temperature set point), altering an alarm configuration, etc.

At 608, the method 600 includes displaying operational information associated with the one or more commissioned devices via a dashboard of the instance of the lightweight web-based supervisor. For instance, the operational information and other information (e.g., information identifying a particular equipment group and/or a particular equipment schedule, etc.) may be displayed via a hub. For example, the hub may be configured to display information representative of the dashboard and/or may be configured to display the dashboard of the lightweight web-based supervisor. For instance, a home screen or other screen may be configured to display information (e.g., an amount of energy consumption over a period of time by one or more commissioned devices) summarizing performance of one or more commissioned devices, yet another screen may be configured to display some or all information of a dashboard (e.g., that is tailor to a specific network).

However, in some instances the operational information and other information may be displayed via a PC and/or may be displayed via a mobile device, as described herein. For instance, the operational information and other information may be displayed via a dedicated PC in the network (e.g., via a dashboard of an instance of the lightweight web-based supervisor and/or via a web-browser) or via a web-browser of a remotely located PC. In some instances, a hub may be in communication with a companion application executing on a mobile device, wherein the companion application is configured to display information representative of the dashboard, the dashboard, or both. That is, the mobile application may be configured to display information (e.g., an amount of energy consumption over a period of time by one or more commissioned devices) summarizing performance of one or more commissioned devices and/or may be configured to display some or all information of a dashboard (e.g., that is tailor to a specific network). For instance, the mobile device may display information summarizing performance of one or more commissioned devices and/or may be configured to display some or all information of a dashboard via a web-browser executing on the mobile device.

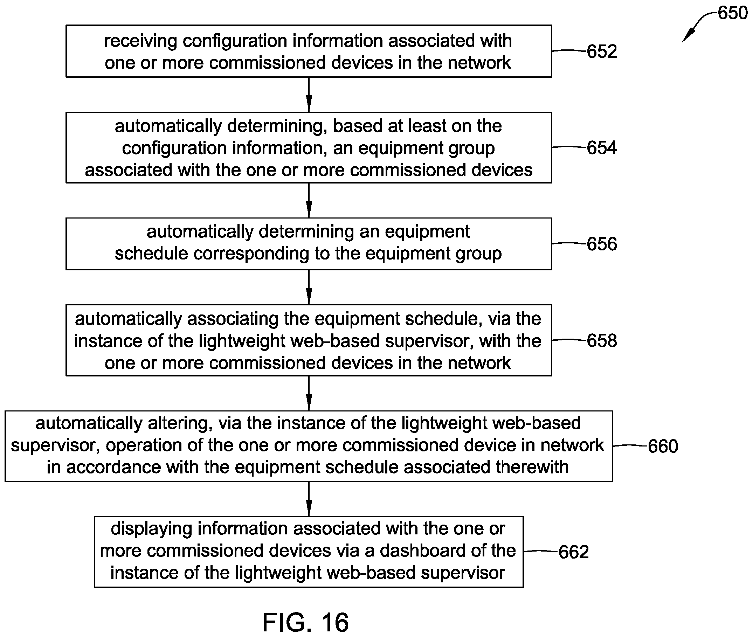

Figure 16 is a flow diagram showing another illustrative method 650 for automatically managing equipment schedules via an instance of a lightweight web-based supervisor. At 652, the method 650 includes receiving configuration information associated with one or more commissioned devices in the network. As described herein, the configuration information may be obtained from a BMS system and/or may be obtained from a commissioning application, among other possibilities.

At 654, the method 650 includes automatically determining an equipment group associated with the one or more commissioned devices. For instance, the equipment group may be determined based at least on the configuration information received at 652, as described herein. At 656, the method 650 includes automatically determining an equipment schedule corresponding to the equipment group. At 658, the method 650 includes automatically associating the equipment schedule, via the instance of the lightweight web-based supervisor, with the one or more commissioned devices in the network. At 660, the method 650 includes automatically altering, via the instance of the lightweight web-based supervisor, operation of the one or more commissioned device in network in accordance with the equipment schedule associated therewith. At 662, the method 600 includes displaying information associated with the one or more commissioned devices via a dashboard of the instance of the lightweight web-based supervisor. For instance, the method 600 may include displaying operational information, the equipment group, and/or the equipment schedule associated with the one or more commissioned devices via a dashboard of the instance of the lightweight web-based supervisor. In some instances, the method 600 may include displaying the operational information (e.g., an on/off status, a temperature, a voltage/current load, etc.), the equipment group, and the equipment schedule associated with the one or more commissioned devices via a dashboard of the instance of the lightweight web-based supervisor.

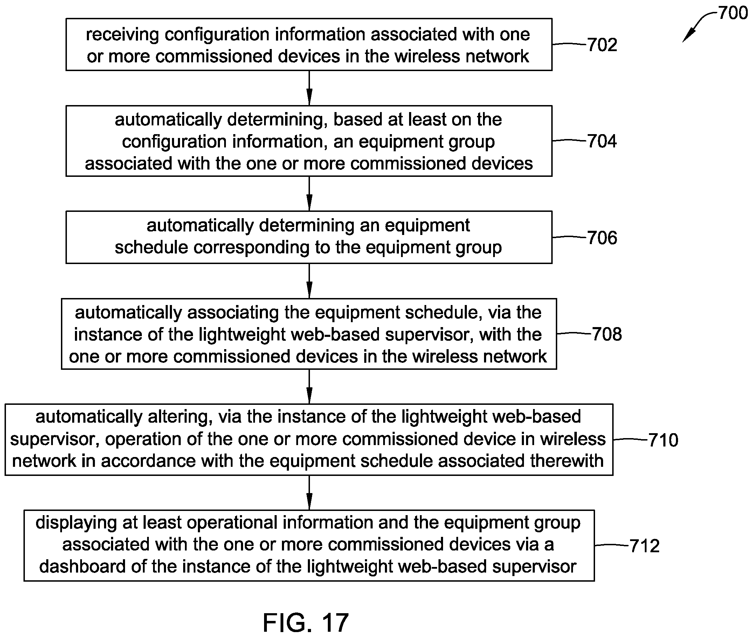

Figure 17 is a flow diagram showing yet another illustrative method 700 for automatically managing equipment schedules via an instance of a lightweight web-based supervisor. At 702, the method 700 may include receiving configuration information associated with one or more commissioned devices in the network. At 704, the method 700 may include automatically determining, based at least on the configuration information, an equipment group associated with the one or more commissioned devices. At 706, the method 700 may include automatically determining an equipment schedule corresponding to the equipment group. At 708, the method 700 may include automatically associating the equipment schedule, via the instance of the lightweight web-based supervisor, with the one or more commissioned devices in the network.

At 708, the method 700 may include automatically altering, via the instance of the lightweight web-based supervisor, an operation of the one or more commissioned devices in network in accordance with the equipment schedule associated therewith. For instance, the method may include automatically altering an operation of one or more smart sockets. For example, the method may include altering via the instance of the lightweight web-based supervisor, an operation of the smart sockets in accordance with the equipment schedule associated therewith. Examples of alteration of an operation of the one or more smart sockets include altering one or more of i) an alarm schedule of the smart sockets, ii) an on/off schedule smart sockets, and/or iii) altering an update schedule (e.g., a firmware update schedule) of the smart sockets, among other possibilities.

At 710, the method 700 may include displaying information associated with the one or more commissioned devices. For instance, the method 700 may include displaying at least the equipment group associated with the one or more commissioned devices via a dashboard of the instance of the lightweight web-based supervisor. In some instances, the method 700 may include displaying operational information, the equipment group, and/or the equipment schedule associated with the one or more commissioned devices via a dashboard of the instance of the lightweight web-based supervisor. For example, the method 700 may include displaying operational information, the equipment group, and the equipment schedule associated with the one or more commissioned devices via a dashboard of the instance of the lightweight web-based supervisor.

In some instances, the methods herein can automatically resolve conflicts between a plurality of schedules associated with one or more commissioned devices. Examples of various schedules include a weekly schedule, a holiday schedule, a critical schedule, and a special event schedule. Various entities may create schedules such a portfolio level schedules (e.g., which may be applied to a plurality of sites or buildings) or site level schedules (e.g., which a specific to a site or building), among other types of schedules. In some instances, a plurality of schedules assigned to one or more commissioned devices my conflict. For instance, a portfolio level schedule and a site level schedule may be assigned to one or more commissioned devise. In such instances, a conflict between the portfolio level schedule and a site level schedule. For instance portfolio level schedule may have the one or more devices in an "off' state at a given day and time, while the site level schedule may have the one or more devices in an "on' state at the same day and time.

When a conflict is present, the approaches herein may resolve the conflict by automatically overriding a schedule that is in conflict with another schedule. For instance, the lightweight supervisors herein may automatically override a site level schedule (or other type of schedule) with a portfolio level schedule (e.g., such that the one or more device operate in accordance with the portfolio level schedule. However, in some embodiments, the lightweight supervisor may override a portfolio level schedule with a site level (or other type) of schedule. That is, such approach may prioritize a local (e.g., site level schedule). For instance, a critical event (e.g., a firmware update) in a first schedule that conflicts with another event (e.g., being in an "off state") in another schedule at that same day and time may be prioritized to ensure that the critical event occurs and/or that the device is operated in accordance with the critical event scheduling. That is, the lightweight supervisor can automatically determine and automatically mitigate conflicts between a plurality of schedules by prioritizing an individual schedule (e.g., a portfolio level schedule) among a plurality of schedules associated with an individual commissioned device that is associated with the plurality of schedules.

In some embodiments, there can be a plurality of events added to a single equipment schedule thereby satisfying various needs of scheduling multiple equipment types and/or multiple commissioned device and/or building resources based on the activities planned for each day in different zones of the building, etc. Events in an equipment schedule may be applied to any day of the week or all days of the week, for instance, based on the event type. For example, daily standup meeting happening across all stores on every day morning at a given time (e.g., 9 AM) and devices may be scheduled accordingly. The equipment schedules can be applied to any hierarchy under the organization. All common activities across sites and/or geographies will be applied may be applied at a portfolio level. Yet, some events in an equipment schedule may be specific to only few regions in a country, specific to a country, or specific to a given site, among other possibilities.

Once equipment schedules are determined (e.g., automatically determined by a lightweight supervisor), the equipment schedules may be automatically downloaded to individual sites. If an equipment local schedule already had a local event already added in a schedule, there could be multiple events added at the same time in a calendar schedule. In some instances, the last created (most recently created) schedule event will take the precedence and schedule the resources accordingly, among other possibilities.

In some embodiments, the equipment schedules (e.g., along with any updates thereto) may be downloaded or otherwise provided to the commissioned devices periodically. For instance, in some case all sites may download equipment schedules at the same time (e.g., at midnight (local time) periodically (e.g., everyday). When new events are present in an equipment schedule that start date for the new events may be started at any time following the download, for instance, the new events and equipment schedule may be started immediately following the download of the equipment schedule.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for automatically onboarding an instance of a lightweight web-based supervisor in a network, the method comprising:
receiving configuration information associated with one or more commissioned devices in the network;
automatically discovering an installation or initial execution of the instance of the lightweight web-based supervisor on the one or more commissioned devices in the network;
subsequent to automatically discovering the installation or initial execution of the instance of the lightweight web-based supervisor, automatically provisioning the instance of the lightweight web-based supervisor based at least on the configuration information of the one or more commissioned devices; and
subsequent to automatically configuring the lightweight web-based supervisor, automatically mapping and displaying operational information and configuration information associated with the one or more commissioned devices via a dashboard of the instance of the lightweight web-based supervisor.

2. The method of claim 1, wherein one or more of the commissioned devices is configured as a web-server, wherein the web-server is configured to host the instance of the lightweight web-based supervisor.

3. The method of claim 2, wherein the one or more commissioned devices that is configured as the web-server is a hub.

4. The method of claim 3, wherein the hub that is configured to as the web-server to host the instance of the lightweight web-based supervisor is an individual hub.

5. The method of claim 4, wherein the individual hub is a first hub included in a plurality of hubs.

6. The method of claim 5, wherein the first hub is configured as a master hub which controls a second hub included in the plurality of hubs, a sub-set of the one or more commissioned devices associated with the second hub, or both.

7. The method of claim 3, wherein the hub is configured to display the dashboard via a user interface of the hub.

8. The method of claim 2, wherein the one or more commissioned devices include a desktop, a laptop, a tablet, a server, or an all-in-one (AIO) computing device, and wherein the desktop, the laptop, the tablet, the server, or the all-in-one (AIO) computing device includes a user interface that is configured to display the dashboard.

9. The method of claim 1, wherein the receiving the configuration information associated with the one or more commissioned devices in the network occurs in an absence of a gateway.

10. The method of claim 1, wherein the one or more commissioned devices comprise a plurality of internet-of-things (IoT) devices, the network includes a wireless network, and the plurality of IoT devices are wirelessly coupled via the wireless network to one or more hubs, the method comprising:
automatically discovering the installation or initial execution of the instance of the lightweight web-based supervisor on a hub;
automatically provisioning the instance of the lightweight web-based supervisor based at least on the configuration information of the plurality of IoT devices;
subsequent to automatically provisioning the lightweight web-based supervisor, automatically mapping and displaying configuration information and operation information associated with the plurality of IoT devices via a dashboard of the instance of the lightweight web-based supervisor; and
altering a configuration or operation of one or more of the plurality of IoT devices in the wireless network responsive to an input received via the dashboard of the lightweight web-based supervisor.

11. The method of claim 10, wherein automatically provisioning the lightweight web-based supervisor further comprises one or more of:
automatically installing the lightweight web-based supervisor;
automatically licensing the lightweight web-based supervisor;
automatically installing drivers associated with the lightweight web-based supervisor
automatically building a list of the plurality of IoT devices in the wireless network;
automatically configuring a history associated with the plurality of IoT devices in the wireless network;
automatically configuring alarms associated with one or more of the plurality of IoT devices in the wireless network; and
automatically configuring alarms associated with the plurality of IoT devices in the wireless network.

12. The method of claim 10, wherein automatically mapping and displaying information associated with the plurality of IoT devices further comprises:
determining a predetermined dashboard associated with one or more of the plurality of IoT devices in a dashboard of the lightweight web-based supervisor; and
displaying the information associated with the one or more of the plurality of IoT devices in the predetermined dashboard of the lightweight web-based supervisor.

13. The method of claim 10, wherein automatically mapping and displaying information associated with the plurality of IoT devices further comprises:
determining a hierarchy of the plurality of IoT devices in a dashboard of the lightweight web-based supervisor; and
displaying the hierarchy of the plurality of IoT devices in the dashboard of the lightweight web-based supervisor.

14. The method of claim 10, wherein the wireless network is a wireless mesh network.

15. The method of claim 14, wherein the plurality of IoT devices are one or more smart sockets.
